# EUROPÄISCHE PATENTSCHRIFT

(11) **EP 2 133 592 B1**
(45) Veröffentlichungstag und Bekanntmachung des Hinweises auf die Patenterteilung: **27.02.2013**
(21) Anmeldenummer: 09159374.9
(22) Anmeldetag: 05.05.2009
(51) Int. Cl.: F16H 3/00, F16H 37/04

(54) **Mehrgruppengetriebe eines Kraftfahrzeuges**
Motor vehicle multi-group drive
Boîte de vitesse à plusieurs groupes d'un véhicule automobile

(30) Priorität: 09.06.2008 DE 102008002295
(43) Veröffentlichungstag der Anmeldung: 16.12.2009
(73) Patentinhaber: ZF Friedrichshafen AG, 88038 Friedrichshafen (DE)
(72) Erfinder: Dittrich, Alan, 78464 Konstanz (DE); Hoffmann, Rayk, 88048 Friedrichshafen (DE)

(56) Entgegenhaltungen:
- DE-A1- 3 715 880
- DE-A1-102004 041 525
- DE-A1-102005 046 894

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 und dem Oberbegriff des Patentanspruchs 14.

Mehrgruppengetriebe bestehen aus zwei oder mehr meist seriell angeordneten Getriebegruppen, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sie sich im Vergleich zu manuellen Schaltgetrieben durch einen hohen Bedienungskomfort aus und sind im Vergleich zu Automatgetrieben besonders wirischaftlich in den Herstellungs- und Betriebskosten.

Bauartbedingt unterlagen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Durch das Rollen des Fahrzeugs während der Zugkraftunterbrechung können unerwünschte Geschwindigkeitserhöhungen oder Geschwindigkeitsverluste auftreten. Zudem kann ein erhöhter Kraftstoffverbrauch entstehen. Während sich die Zugkraftunterbrechungen bei Personenkraftfahrzeugen durch Einbußen der Fahrdynamik in der Regel eher nur störend auswirken, beispielsweise bei einer sportlich orientierten Fahrweise beim Hochschalten, kann sich bei mittleren oder schweren Nutzfahrzeugen die Fahrgeschwindigkeit derart verzögern, dass ein Hochschalten unmöglich wird und es an Steigungen zu unerwünschten Rückschaltvorgängen, Kriechfahrten oder sogar zu zusätzlichen Anfahrvorgängen kommt.

Aus der DE 10 2006 024 370 A1 der Anmelderin, die die Merkmale des Oberbegriffs des Anspruchs 1 enthält, ist ein zugkraftunterstütztes automatisiertes Mehrgruppengetriebe mit einer Splittergruppe als Eingangs- oder Vorschaltgetriebe, einem Hauptgetriebe als Grundgetriebe und einer Bereichsgruppe als Ausgangs- oder Nachschaltgetriebe bekannt. Die Bauweise des bekannten Mehrgruppengetriebes mit dem Eingangsgetriebe und dem Hauptgetriebe ermöglicht die Schaltung eines Direktganges als einen Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann. Die Lastschaltkupplung überträgt dabei ein Motordrehmoment eines Antriebsmotors auf den Getriebeausgang, wobei ein freiwerdendes dynamisches Moment bei einer Drehzahlabsenkung zwischen dem Ursprungsgang und dem Zielgang genutzt wird, um den Zugkrafteinbruch weitgehend zu kompensieren. Eine herkömmliche separate Anfahrkupplung, die beim Gangwechsel geschlossen bleiben kann, stellt den Kraftschluss zwischen dem Antriebsmotor und der Eingangswelle her. Die Lastschaltkupplung kann zwischen dem Eingangsgetriebe und dem Hauptgetriebe oder zwischen der Anfahrkupplung und dem Eingangsgetriebe angeordnet sein.

Weiterhin ist aus der DE 195 48 622 C1 ein Vorgelege-Wechselgetriebe bekannt, bei dem zwischen einem Antriebsmotor und einem Getriebeeingang eine von dem Antriebsmotor antreibbare Reibungskupplung, eine Klauenkupplung und eine Synchronkupplung angeordnet sind. Das Eingangselement der Reibungskupplung ist über die Klauenkupplung mit einer Getriebeeingangswelle verbindbar. Auf der Getriebeeingangswelle sitzen Festräder der Gänge 1 bis 4, die mit zugehörigen Losrädern auf einer parallelen Vorgelegewelle kämmen. Die Losräder sind über Synchronkupplungen drehfest mit der Vorgelegewelle verbindbar. Bei einem 5. Gang sitzt umgekehrt das Losrad auf der Getriebeeingangswelle und das zugehörige Festrad sitzt auf der Vorgelegewelle.

Das Ausgangselement der Reibungskupplung ist über die Synchronkupplung wechselseitig mit der Getriebeeingangswelle oder mit dem Losrad des 5. Ganges verbindbar. Bei einem Anfahrvorgang verbindet die Synchronkupplung die Reibungskupplung mit der Getriebeeingangswelle, von der das Drehmoment des Antriebsmotors über den Zahnradsatz des geschalteten 1. Gangs zum Abtrieb ausgangs der Vorgelegewelle abgeführt wird.

Nach dem Anfahren wird die Reibungskupplung geöffnet und die Klauenkupplung geschlossen, d.h. der Momentenfluss wechselt von der Reibungskupplung zur Klauenkupplung. Bei einem folgenden Gangwechsel vom 1. Gang in den 2. Gang wird die Synchronkupplung mit dem Losrad des 5. (höchsten) Ganges verbunden und die Reibungskupplung eingerückt. Der Radsatz des 1. Ganges wird dadurch entlastet, worauf die Verbindung des Losrades des 1. Ganges mit der Vorgelegewelle aufgehoben und die Verbindung des Losrades des 2. Ganges mit der Vorgelegewelle hergestellt wird. Anschließen wird die Reibungskupplung erneut geöffnet, so dass der Momentenfluss nun im 2. Gang über die Klauenkupplung fortgesetzt wird.

Das bekannte Getriebe ermöglicht zugkraftunterbrechungsfreie Gangwechsel und erfüllt somit die ihm zugrunde liegende Aufgabe, insbesondere auch im Anfahrbereich, beim Wechsel vom 1. Gang in den 2. Gang, Drehmomentunterbrechungen zu vermeiden. Allerdings ist es auf fünf Gänge begrenzt. Mehrgruppengetriebe mit 12 oder mehr Gängen erfordern jedoch, aus dieser Druckschrift nicht entnehmbar, weitergehende Maßnahmen, um zugkraftunterstütze Schaltabfolgen der Getriebegruppen zu ermöglichen.

Vor diesem Hintergrund liegt der Erfindung die Aufgabe zugrunde, ein Mehrgruppengetriebe und ein Verfahren zum Betrieb eines Mehrgruppengetriebes anzugeben, die mit möglichst einfachen sowie kostengünstigen und bauraumsparenden Mitteln Zugkraftunterbrechungen beim Gangwechsel vermeiden und einen hohen Schaltkomfort gewährleisten.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass bei einem automatisierten Gruppengetriebe eine vom Antriebsmotor antreibbare Reibungskupplung, die im Zusammenwirken mit Schaltkupplungen wechselweise entweder eine Getriebeeingangswelle oder eine Getriebehauptwelle mit einem Antriebsdrehmoment beaufschlagen kann, einerseits als Anfahrkuppiung betreibbar ist und andererseits bei einem Gangwechsel auch als Zwischengangkupplung zur Schaltung eines zugkraftunterstützenden Direktganges nutzbar ist.

Demnach geht die Erfindung aus von einem Mehrgruppengetriebe eines Kraftfahrzeuges, mit wenigstens zwei in einem Antriebsstrang angeordneten Getriebegruppen, bei dem Mittel zur Zugkraftunterstützung bei Gangwechseln vorhanden sind. Zur Lösung der gestellten Aufgabe sieht die Erfindung zudem vor, dass zwischen einem Antriebsmotor mit einer Antriebswelle Lind einem Getriebeeingang mit einer Getriebeeingangswelle eine eine Reibungskupplung sowie zwei Schaltkupplungen umfassende Kupplungseinrichtung angeordnet ist, wobei über die eine Schaltkupplung in einer ersten Schaltstellung in Wirkverbindung mit der Reibungskupplung oder in einer zweiten Schaltstellung bei Überbrückung der Reibungskupplung die Antriebswelle mit der Getriebeeingangswelle verbindbar ist, und wobei über die andere Schaltkupplung in einer weiteren Schaltstellung in Wirkverbindung mit der Reibungskupplung die Antriebswelle direkt mit einer abtriebsseitigen Getriebehauptwelle verbindbar ist.

Unter einem Gangwechsel wird ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt. Eine Vorschaltgruppe wird auch als Splittergetriebe oder Splittergruppe (GV), eine Hauptgruppe auch als Hauptgetriebe oder Grundgetriebe (HG) und eine Nachschaltgruppe auch als Bereichsgetriebe oder Bereichsgruppe (GP) bezeichnet. Des Weiteren wird eine Reibungskupplung nachfolgend auch kurz Reibkupplung genannt.

Weiterhin geht die Erfindung aus von einem Verfahren zum Betrieb eines Mehrgruppengetriebes eines Kraftfahrzeuges, mit wenigstens zwei in einem Antriebsstrang angeordneten Getriebegruppen, bei dem bei einem Gangwechsel zugkraftunterstützende Mittel aktiviert werden. Die gestellte Aufgabe bezüglich des Verfahrens wird dadurch gelöst, dass eine zwischen einem Antriebsmotor mit einer Antriebswelle und einem Getriebeeingang mit einer Getriebeeingangswelle angeordnete Kupplungseinrichtung, die eine von dem Antriebsmotor antreibbare Reibungskupplung sowie zwei Schaltkupplungen umfasst, wobei die erste Schaltkupplung ausgangsseitig mit der Getriebeeingangswelle verbunden und eingangsseitig wechselweise zwischen einer Kopplung mit der Reibungskupplung und einer Überbrückung der Reibungskupplung umschaltbar ist, und die zweite Schaltkupplung ausgangsseitig mit einer abtriebsseitigen Getriebehauptwelle verbunden und eingangsseitig mit der Reibungskupplung koppelbar ist, derart angesteuert wird, dass die Reibungskupplung im Zusammenwirken mit der ersten Schaltkupplung als eine Anfahrkupplung und im Zusammenwirken mit der zweiten Schaltkupplung, bei der die erste Schaltkupplung gleichzeitig die Reibungskupplung im Kraftschluss mit dem Antriebsmotor überbrückt, als eine Zwischengangkupplung zum Schalten eines Zwischengangs bei einem Gangwechsel fungiert, bei dem eine direkte Kraftflussverbindung zwischen dem Antriebsmotor und der mit einer Getriebeabtriebswelle zumindest wirkverbundenen Getriebehauptwelle hergestellt wird.

Durch die Zwischengangschaltung wird vorteilhaft bei allen Zugschaltungen eine signifikante Verringerung eines Geschwindigkeitsverlustes des Fahrzeugs und somit im Ergebnis eine Fahrleistungssteigerung erreicht sowie der Schalt- und Fahrkomfort erhöht. Da über den Zwischengang die zu synchronisierenden rotierenden Massen abgebremst werden können, kann die üblicherweise zur Abbremsung der Massen bei Hochschaltvorgängen vorgesehene Getriebebremse entfallen, wodurch weitere Kosten, Einbauraum und Gewicht eingespart bzw. reduziert werden. Zudem werden Schwingungen und Schaltschläge effektiv verringert, da der Antriebsstrang während des Gangwechsels durch den Zwischengang stets vorgespannt bleibt, wodurch eine zusätzliche Erhöhung des Schaltkomforts erreicht wird.

Bei einer bevorzugten Ausführungsform der Erfindung sind drei automatisierte Getriebegruppen vorgesehen, wobei erstens eine getriebeehgangsseitige Vorschaltgruppe mit einer motornahen und einer motorfernen Gangkonstante, zweitens eine zentrale Hauptgruppe mit wenigstens drei Gangstufen und drittens eine getriebeausgangsseitige Nachschaltgruppe mit zwei Gangbereichen im Kraftfluss hintereinander angeordnet sind, wobei die Vorschaltgruppe und die Hauptgruppe als Zahnradgetriebe in Vorgelegebauweise mit wenigstens einer gemeinsamen Vorgelegewelle ausgebildet sind und die Nachschaltgruppe als ein Planetengetriebe ausgebildet ist.

Vorzugsweise wird ein derartiges Getriebe mit zwei parallel zueinander angeordneten gemeinsamen Vorgelegewellen konzipiert sein, so dass sich die Leistung entsprechend über zwei Vorgelegewellen verzweigt. Die Erfindung ist aber ebenso vorteilhaft bei Getrieben mit nur einer Vorgelegewelle oder anderen Gruppengetrieben anwendbar. Ein solches Getriebe ist aufgrund seiner feinen Gangabstufung und seines hohen Schaltkomforts besonders vorteilhaft in Nutzfahrzeugen einsetzbar.

Über die Gangkonstanten des Splittergetriebes können die Gangstufen der Hauptgruppe variiert werden. Die sich daraus ergebenden Gänge multipliziert die Bereichsgruppe anschließen wahlweise mit einer Planetenübersetzung. Somit ergeben sich bei einem beispielhaften dreigängigen Grundgetriebe eine Anzahl von n = n_{GV} x n_{HG} x n_{GP} = 2 x 3 x 2 = 12 Vorwärtsgängen. Bei einem viergängigen Grundgetriebe sind entsprechend 16 Vorwärtsgänge möglich.

Die erwähnte Nachschaltgruppe ist vorzugsweise vorgesehen, um über eine Bereichsumschaltung die Gangzahl zu verdoppeln, also um eine vergleichsweise hohe Gangzahl zur Verfügung zu stellen. Für die Erfindung ist sie aber nicht zwingend notwendig.

Die Funktionsweise einer derartigen Nachschaltgruppe in Planetenbauweise bei der Zugkraftunterstützung durch einen als Direktgang konzipierten Zwischengang ist wie folgt zu berücksichtigen:

In einer Schaltstellung, bei der die Planetenräder der Bereichsgruppe mit dem Sonnenrad und dem Hohlrad verblockt sind, also das Bereichsgetriebe mit der Drehzahl der Getriebehauptwelle umläuft, ist der Zwischengang der Direktgang des Gesamtgetriebes. Dies ist automatisch auch dann der Fall, wenn, wie bei einer weiteren Ausführungsform der Erfindung vorgesehen sein kann, die Getriebehauptwelle direkt mit einer Getriebeabtriebswelle am Getriebeausgang verbunden ist, also durch das Bereichsgetriebe hindurchgeführt ist. Ansonsten entspricht jedoch der Zwischengang einem Direktgang der Zahnradgetriebegruppen, der von der Planetengetriebeübersetzung überlagert ist. Dabei ist auch zu beachten, dass ein Umschalten der Bereichsgruppe während eines Gangwechsels nicht per se zugkraftunterstützt ist. Eine Erweiterung der Zugkraftunterstützung auf die Bereichsumschaltung kann jedoch vorteilhaft dadurch erreicht werden, dass von vornherein Lastschaltmittel am Bereichsgetriebe angeordnet sind, so dass eine lastschaltbare Bereichsumschaltung möglich ist. Ist keine Nachschaltgruppe vorgesehen, fungiert die Getriebehauptwelle gleichzeitig als Getriebeabtriebswelle des Gesamtgetriebes oder kann mit einer Getriebeabtriebswelle einstückig verbunden sein.

Die erfindungsgemäße Anordnung benötigt gegenüber bekannten zugkraftunterstützten Gruppengetrieben mit einem Anfahrelement und einer Zwischengangkupplung nur eine Reibungskupplung, die mit Hilfe zweier Schaltkupplungen im Wechsel sowohl als Anfahrkupplung als auch als Zwischengangkupplung eingesetzt wird. Demnach werden die Schaltelemente der Gangkonstanten und des Zwischengangs jeweils durch eine Schaltkupplung eingelegt bzw. angesteuert. Die beiden Schaltkupplungen sind unabhängig voneinander mit der Reibungskupplung koppelbar.

Die eine Schaltkupplung kann auf der dem Antriebsmotor zugewandten oder der dem Antriebsmotor abgewandten Seite der Reibungskupplung angeordnet sein. Sie ist als Synchronkupplung, also eine Kupplung mit Synchronisierung, ausgebildet, Ein Schaltelement der Synchronkupplung ist mit der Getriebehauptwelle verbunden. Die Getriebehauptwelle ist an ihrem abtriebsseitigen Ende mit einer Getriebeabtriebswelle direkt oder über ein Bereichsgetriebe verbunden. Die Getriebehauptwelle bildet also unmittelbar oder mittelbar die Abtriebswelle, über die das Motordrehmoment an ein Differenzial zum Antrieb der angetriebenen Fahrzeugräder geleitet wird. Die Synchron-Schaltkupplung besitzt eine Schaltstellung, bei deren Betätigung sie mit der Reibungskupplung gekoppelt ist, so dass eine direkte, über die Reibungskupplung steuerbare Reibschlussverbindung zwischen Antrieb und Abtrieb herstellbar ist. Ansonsten befindet sie sich in einer entkoppelten Position, so dass die Getriebehauptwelle nicht von der Reibungskupplung direkt beaufschlagt wird.

Die andere Schaltkupplung ist auf der dem Antriebsmotor abgewandten Seite der Reibungskupplung angeordnet. Sie kann als eine unsynchronisierte Klauenkupplung oder ebenfalls als eine Synchronkupplung ausgebildet sein. Ein Schaltelement dieser Schaltkupplung ist mit dem motornahen Ende der Getriebeeingangswelle verbunden. An dem motorfernen Ende der Getriebeeingangswelle ist ein Schaltelement einer Schalteinrichtung zum wechselseitigen Schalten der Gangkonstanten der Vorschaltgruppe angeordnet. Die Schalteinrichtung der Vorschaltgruppe ist ihrerseits vorteilhaft als eine Synchronkupplung ausgebildet, über die wahlweise wechselseitig jeweils ein drehbar gelagertes Losrad der Gangkonstanten drehfest mit der Getriebeeingangswelle verbindbar ist.

Die Synchron- oder Klauen-Schaltkupplung besitzt zwei Schaltstellungen, über die der Antriebsmotor direkt oder indirekt mit dem Getriebeeingang koppelbar ist. In der einen Schaltstellung verbindet sie die Getriebeeingangswelle mit der Reibungskupplung. Die Reibungskupplung ist wiederum in geschlossenem Zustand über ein Kupplungseingangsteil der Kupplungseinrichtung mit dem Antriebsmotor verbunden. Der Kraftschluss des Getriebes zum Motor ist also über die Reibungskupplung steuerbar, insbesondere um einen Anfahrvorgang auszuführen. In der anderen Schaltstellung verbindet die Schaltkupplung die Getriebeeingangswelle direkt mit dem Eingangsteil der Kupplungseinrichtung, überbrückt also die Reibungskupplung, die somit für eine Zwischengangsteuerung frei verfügbar wird. Dazwischen ist vorzugsweise eine neutrale Mittenposition vorgesehen, in der sich die Schaltkupplung in keiner von beiden Schaltstellungen befindet.

Eine besonders einfache und kompakte Bauform der Anordnung wird dadurch erreicht, dass die Getriebeeingangswelle als eine die Getriebehauptwelle koaxial umgebende Hohlwelle ausgebildet ist. Zur weiteren Bauraumreduzierung sowie Gewichts- und Kostenersparnis kann vorgesehen sein, dass die Kupplungseinrichtung ein gemeinsames äußeres, die Reibungskupplung und die Schaltkupplungen aufnehmendes, motorseitig mit der Antriebswelle verbundenes Kupplungseingangsteil aufweist, wobei das Kupplungseingangsteil als antreibendes Teil für die Reibungskupplung und wahlweise für die der Getriebeeingangswelle zugeordnete Schaltkupplung wirksam ist, und weiterhin dadurch, dass die Reibungskupplung als antreibendes Teil für die der Getriebehauptwelle zugeordnete Schaltkupplung und wahlweise für die der Getriebeeingangswelle zugeordnete Schaltkupplung wirksam ist.

Die Funktionsweise des erfindungsgemäßen Mehrgruppengetriebes mit Zwischengangschaltung ist wie folgt:

Bei einem Anfahrvorgang wird die Reibungskupplung als Anfahrelement angesteuert. Dazu wird die Reibungskupplung über die zugehörige Schaltkupplung in einer ersten Stellposition der Schaltkupplung mit der Getriebeeingangswelle und damit mit der zum Anfahren geschalteten Gangkonstanten bzw. dem geschalteten Hauptgetriebegang verbunden. Nach dem Anfahren wird die Schaltkupplung in eine zweite Stellposition umgeschaltet, in der die Reibungskupplung überbrückt wird, so dass der Antrieb unter Umgehung der Reibungskupplung vom Kupplungseingangsteil direkt zum Getriebeeingang geleitet wird. Die Reibungskupplung ist dann nicht länger am Kraftschluss zwischen Antriebsmotor und angetriebenem Gang beteiligt und kann ohne Zugkraftunterbrechung des Fahrzeuges ausgerückt werden.

Bei einem Gangwechsel steht die Reibungskupplung nun zur Schaltung eines Zwischengangs und zur Drehzahlanpassung des Antriebsmotors für einen angewählten Zielgang zur Verfügung. Dazu wird die Reibungskupplung über die zweite Schaltkupplung in einer Schaltstellung dieser Schaltkupplung direkt mit der Getriebehauptwelle und damit mit dem Getriebeabtrieb verbunden. Der Momentenfluss bei der Zugkraftunterstützung verläuft also über eine Direktverbindung des Antriebs mit der Getriebehauptwelle. Dadurch wird das Hauptgetriebe lastfrei und somit schaltbar, d.h. der aktuell eingelegte Gang kann ausgerückt und das Hauptgetriebe in Neutralstellung geschaltet werden, während der als Direktgang geschaltete Zwischengang den Vortrieb des Fahrzeuges aufrechterhält.

Die nunmehr als Zwischengangkupplung fungierende Reibungskupplung stützt im schlupfenden Zustand das Drehmoment des Antriebsmotors an der abtriebsseitigen Getriebehauptwelle ab, während die Drehzahl des Antriebsmotors an eine Synchrondrehzahl des Zielganges angepasst wird. Bei erreichter Synchrondrehzahl kann der Zielgang eingelegt, abschließend die Reibungskupplung wieder ausgerückt und der Zwischengang somit geöffnet werden. Die Überbrückung der Reibungskupplung über die erste Schaltkupplung bleibt während des Gangwechsels stets geschlossen.

Alle zugkraftrelevanten Gangwechsel können auf diese Weise vorteilhaft mit geschlossene Schaltkupplungen erfolgen, d.h. bei zwischen Antriebswelle und Getriebeeingangswelle überbrückter Reibungskupplung und bei mit der Reibungskupplung verbundener Getriebehauptwelle, wobei der als Zwischengang geschaltete Direktgang im gesteuerten Schlupfbetrieb der Reibungskupplung geschaltet wird. Grundsätzlich sind auch zugkraftunterstützte Sprünge über mehrere Gangstufen möglich, was besonders bei fein abgestuften Nutzfahrzeuggetrieben im Fahr- und Rangierbetrieb von Vorteil ist.

Zur Verdeutlichung der Erfindung ist der Beschreibung eine Zeichnung mit zwei Ausführungsbeispielen beigefügt, In dieser zeigt
Fig. 1 ein Getriebeschema eines automatisierten Mehrgruppengetriebes eines Kraftfahrzeuges mit einer antriebsseitigen Kupplungseinrichtung umfassend eine Reibungskupplung und zwei synchronisierte Schaltkupplungen,
Fig. 2 das Getriebeschema von Fig. 1 mit Schaltkupplungsstellung bei eingelegtem Anfahrgang,
Fig. 3 das Getriebeschema von Fig. 1 mit Schaltkupplungsstellung bei eingelegtem Zwischengang und überbrückter Reibungskupplung,
Fig. 4 eine zweite Ausführungsform eines Getriebeschemas eines automatisierten Mehrgruppengetriebes eines Kraftfahrzeuges mit einer antriebsseitigen Kupplungseinrichtung umfassend eine Reibungskupplung, eine synchronisierte Schaltkupplung und eine Klauen-Schaltkupplung,
Fig. 5 das Getriebeschema von Fig. 4 mit dargestelltem Momentenfluss im Anfahrgang,
Fig. 6 das Getriebeschema von Fig. 4 mit dargestelltem Momentenfluss im Fahrbetrieb, und
Fig. 7 das Getriebeschema von Fig. 4 mit dargestelltem Momentenfluss im Zwischengang.

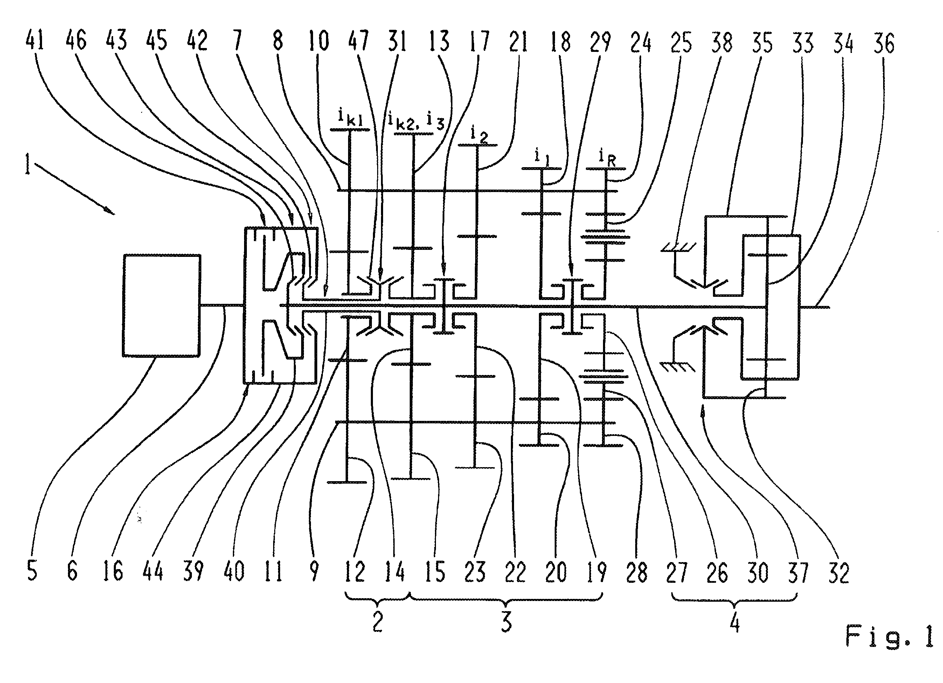

Die Fig. 1 zeigt ein als Zwei-Vorgelegewellen-Getriebe 1 ausgebildetes automatisiertes Mehrgruppengetriebe mit zwei zueinander parallelen, drehbar gelagerten Vorgelegewellen 8, 9 und drei hintereinander angeordneten Getriebegruppen 2, 3 und 4, wie es beispielsweise im Antriebsstrang eines Nutzfahrzeuges vorgesehen sein kann. Ein derartiges Getriebe ist an sich ohne Zugkraftunterstützung aus der Baureihe ZF-AS Tronic der Anmeldenn und mit Zugkraftunterstützung aus der eingangs erwähnten DE 10 2006 024 370 A1 der Anmelderin bekannt.

Die erste, motorseitig angeordnete Getriebegruppe 2 ist als ein zweigängiges Splittergetriebe ausgebildet. Die zweite, zentrale Getriebegruppe 3 wird durch ein dreigängiges Haupt- oder Grundgetriebe gebildet. Als dritte, abtriebsseitige Getriebegruppe 4 ist ein nachgeschaltetes zweigängiges Bereichsgetriebe angeordnet.

Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12 bzw. 13, 15 umfassen, die mit einem Losrad 11 bzw. 14 kämmen. Die erste Gangkonstante iₖ₁ ist einem Antriebsmotor 5 und die zweite Gangkonstante iₖ₂ dem Hauptgetriebe 3 zugewandt angeordnet. Zur Schaltung der Gangkonstanten iₖ₁, iₖ₂ des Splittergetriebes 2 ist eine Schalteinrichtung 31 mit Synchronisierung angeordnet, über die wahlweise wechselseitig die Losräder 11 bzw. 14 mit einer Getriebeeingangswelle 40 drehfest verbindbar sind. Die Getriebeeingangswelle 40 ist als eine äußere Hohlwelle ausgebildet, durch die eine innere, zentrale Getriebehauptwelle 30 koaxial hindurchgeführt ist.

Das Hauptgetriebe 3 weist drei Vorwärtsgangradsätze i₁, i₂ und i₃ sowie einen Rückwärtsgangradsatz i_{R} auf. Der 1. Hauptgetriebegang i₁ und der 2. Hauptgetriebegang i₂ umfassen jeweils zwei Festräder 18, 20 bzw. 21, 23 und ein Losrad 19 bzw. 22. Der 3. Hauptgetriebegang i₃ ist gemeinsam mit der zweiten Gangkonstante iₖ₂ des Splittergetriebes 2 realisiert. Der Rückwärtsgang-Radsatz i_{R} umfasst zwei Festräder 24, 28, ein Losrad 26 und zwei drehbar gelagerte Zwischenräder 25, 27 zur Drehrichtungsumkehr, die einerseits mit dem jeweils zugehörigen Festrad 24 bzw. 28 und andererseits mit dem Losrad 26 kämmen.

Zur Schaltung des 1. Hauptgetriebeganges i₁ und des Rückwärtsgang-Radsatzes i_{R} ist eine unsynchronisierte Klauen-Schalteinrichtung 29 vorgesehen, über welche die zugehörigen Losräder 19 bzw. 26 wahlweise drehfest mit der zentralen Getriebehauptwelle 30 verbindbar sind. Die Schaltung des 2. Hauptgetriebeganges i₂ und des 3. Hauptgetriebeganges i₃ erfolgt über eine weitere Klauen-Schalteinrichtung 17, über die zugehörigen Losräder 22 bzw. 14 wahlweise drehfest mit der Getriebehauptwelle 30 verbindbar sind.

Das nachgeschaltete Bereichsgetriebe 4 ist als ein Planetengetriebe ausgebildet. Darin ist ein Planetenradsatz 32 mit mehreren nicht explizit dargestellten Planetenrädern von einem Planetenradträger 33 geführt. Die Planetenräder kämmen einerseits mit einem zentralen Sonnenrad 34 und andererseits mit einem äußeren Hohlrad 35. Das Sonnenrad 34 ist mit dem abtriebsseitigen Ende der Getriebehauptwelle 30 verbunden. Der Planetenradträger 33 ist mit einer Getriebeabtriebswelle 36 verbunden.

Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38, so dass die Planetenräder zwischen Hohlrad 35 und Sonnenrad 34 umlaufen und die Getriebeabtriebswelle 36 entsprechend der Übersetzung über den Planetenradträger 33 gleichsinnig mit der Getriebehauptwelle 30 angetrieben wird. In einer zweiten Schaltstellung wird das Hohlrad 35 mit dem Planetenradträger 33 verblockt, so dass das Planetengetriebe 4 und damit die Getriebeabtriebswelle 36 direkt mit der Drehzahl der Getriebehauptwelle 30 rotiert.

Zwischen dem Antriebsmotor 5 und einem Getriebeeingang 7 ist erfindungsgemäß eine Kupplungseinrichtung 16 mit einer Reibungskupplung 41 und zwei als Synchronkupplungen ausgebildeten Schaltkupplungen 42, 43 angeordnet. Die Kupplungseinrichtung 16 besitzt ein hohlzylinderförmiges Kupplungseingangsteil 44, welches von dem Antriebsmotor 5 über eine Antriebswelle 6 antreibbar ist. Das Kupplungseingangsteil 44 umgreift die drei Kupplungen 41, 42 und 43. An seiner Innenseite sind Reibpartner angeordnet, die mit entsprechenden Reibpartnern der Reibungskupplung 41 korrespondieren und bei Bedarf zusammenwirken.

Die eine, zur ersten Gangkonstanten iₖ₁ benachbarte, Synchronkupplung 42 weist ein drehfest mit dem motorseitigen Ende der Getriebeeingangswelle 40 verbundenes Schaltelement 45 auf, welches wahlweise mit der Reibungskupplung 41 oder dem Kupplungseingangsteil 44 verbindbar ist. Dementsprechend ist der Kraftschluss zwischen dem Antriebsmotor 5 und der Getriebeeingangswelle 40 zwischen Reibkupplungsverbindung und Kupplungseingangsteilverbindung umschaltbar.

Am getriebeseitigen Ende der Getriebeeingangswelle 40 ist ein Schaltelement 47 der Schalteinrichtung 31 der Vorschaltgruppe 2 drehfest angeordnet. Das Schaltelement 45 der Synchronkupplung 42 und das Schaltelement 47 der Schalteinrichtung 31 der Vorschaltgruppe 2 sind somit über die Getriebeeingangswelle 40 drehfest miteinander verbunden.

Die andere, zur Reibungskupplung 41 benachbarte Synchronkupplung 43 ist zur wahlweisen Herstellung einer reibschlüssigen Verbindung zwischen Antriebsmotor 5 und Getriebehauptwelle 30 ausgebildet. Ihr Schaltelement 46 ist drehfest am motorseitigen Ende der Getriebehauptwelle 30 angeordnet und mit der Reibungskupplung 41 koppelbar.

Zur Kopplung der Reibungskupplung 41 mit den Synchronkupplungen 42, 43 ist, zum Getriebeeingang 7 hinzeigend, an der Reibungskupplung 41 ein Koppelteil 39 ausgebildet, welches zwischen dem Schaltelement 45 der einen Synchronkupplung 42 und dem Schaltelement 46 der anderen Synchronkupplung 43 eingreift.

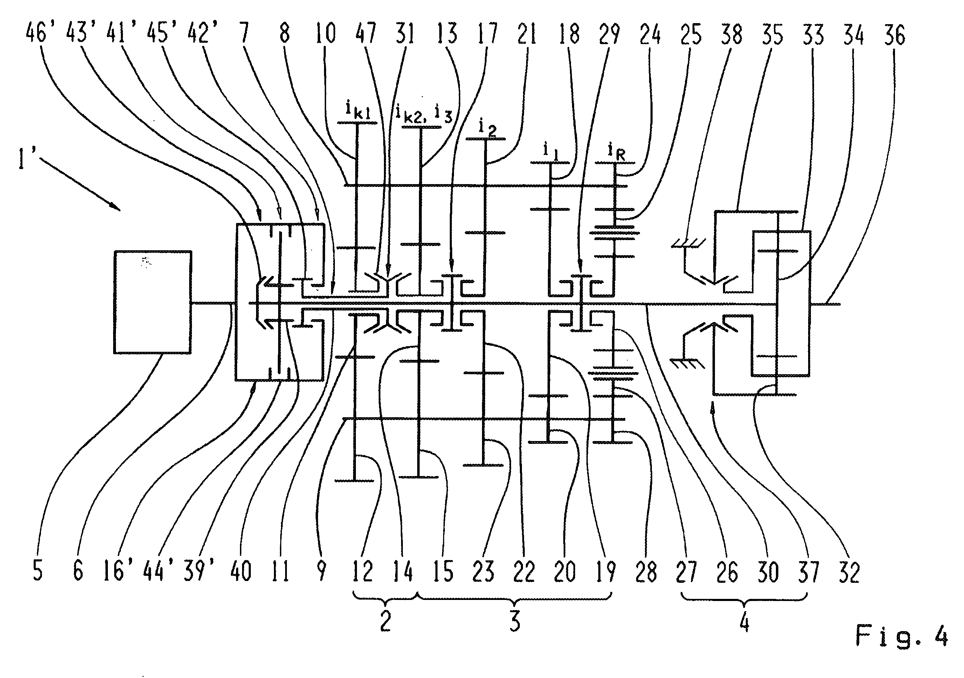

Die Fig. 4 zeigt ein weiteres Zwei-Vorgelegewellen-Getriebe 1' mit einer Kupplungseinrichtung 16'. Die Kupplungseinrichtung 16' weist eine Reibungskupplung 41' sowie zwei Schaltkupplungen 42', 43' auf. Die zur ersten Gangkonstanten iₖ₁ hin orientierte Schaltkupplung 42' ist als eine Klauenkupplung ausgebildet. Sie besitzt ein drehfest mit dem einen Ende der Getriebeeingangswelle 40 verbundenes Schaltelement 45', welches wahlweise mit der Reibungskupplung 41' oder einem Kupplungseingangsteil 44' verbindbar ist.

Die Klauenkupplung 42' schaltet wahlweise eine Reibschlussverbindung zwischen Antriebsmotor 5 und Getriebeeingangswelle 40 über die Reibungskupplung 41' oder eine Formschlussverbindung zwischen Antriebsmotor 5 und Getriebeeingangswelle 40 direkt über das Kupplungseingangsteil 44'.

Die andere Schaltkupplung 43' ist als eine Synchronkupplung ausgebildet, die auf der dem Motor 5 zugewandten Seite der Reibungskupplung 41' angeordnet ist. Ihr Schaltelement 46' ist drehfest am motorseitigen Ende der Getriebehauptwelle 30 angeordnet und mit der Reibungskupplung 41' koppelbar. Zur Kopplung der Reibungskupplung 41' mit den Schaltkupplungen 42', 43' ist an der Reibungskupplung 41' ein zweiseitiges Koppelteil 39' ausgebildet, welches einerseits mit dem Schaltelement 45' der Klauenkupplung 42' und andererseits mit dem Schaltelement 46' der Synchronkupplung 43' verbindbar ist. Im Übrigen entspricht das Getriebe 1' dem Getriebe 1 gemäß Fig. 1.

Aus der Kombination der Getriebegruppen 2, 3 und 4 des dargestellten Getriebeschemas 1 bzw. 1' ergaben sich insgesamt n = 2 x 3 x 2 = 12 Gänge. Der Kraftfluss verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang bis 6. Gang" geschaltet werden. Ist der 6. Gang erreicht, schaltet das Bereichsgetriebe 4 um und es werden erneut das Hauptgetriebe 3 und das Splittergetriebe 2 alternierend durchgeschaltet, so dass wiederum 2 x 3 = 6 Gänge, nun aber in einem oberer Gangbereich "7. Gang bis 12. Gang", geschaltet werden. Zudem schaltet das Splittergetriebe 2 auch die Rückwärtsgang-Übersetzung i_{R} alternierend, so dass zwei Rückwärtsgänge zur Verfügung stehen.

Ein erfindungsgemäßes Verfahren zum Betrieb eines Mehrgruppengetriebes 1,1' eines Kraftfahrzeuges beruht im Wesentlichen darauf, dass eine Reibungskupplung 41, 41' im Zusammenwirken mit einer ersten und/oder einer zweiten Schaltkupplung 42, 42' bzw. 43, 43' als Anfahrkupplung bei Anfahrvorgängen und als Zwischengangkupplung bei Gangwechseln angesteuert und betrieben wird.

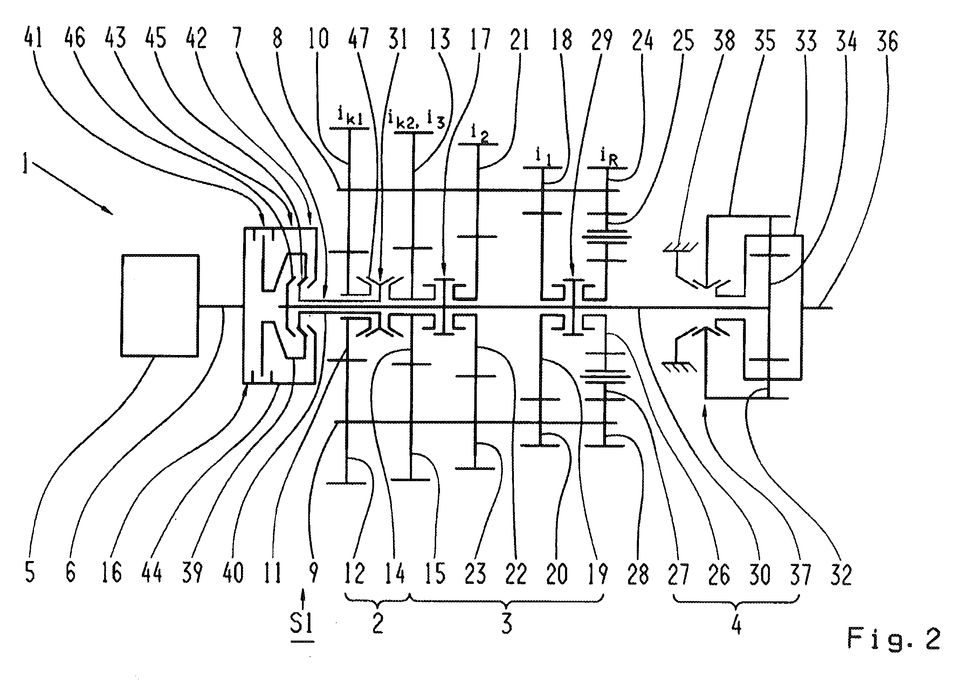

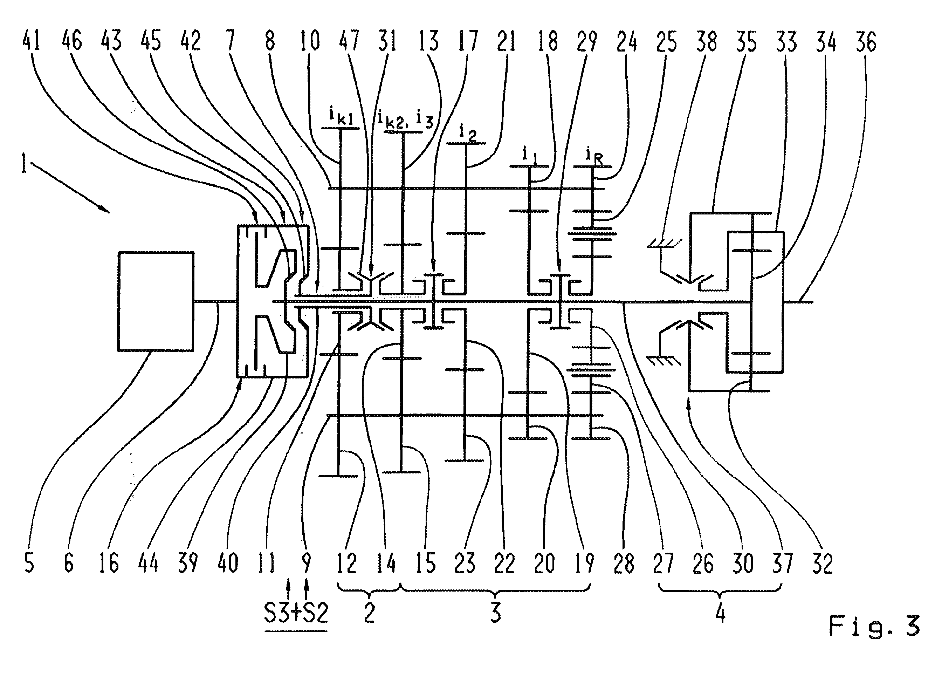

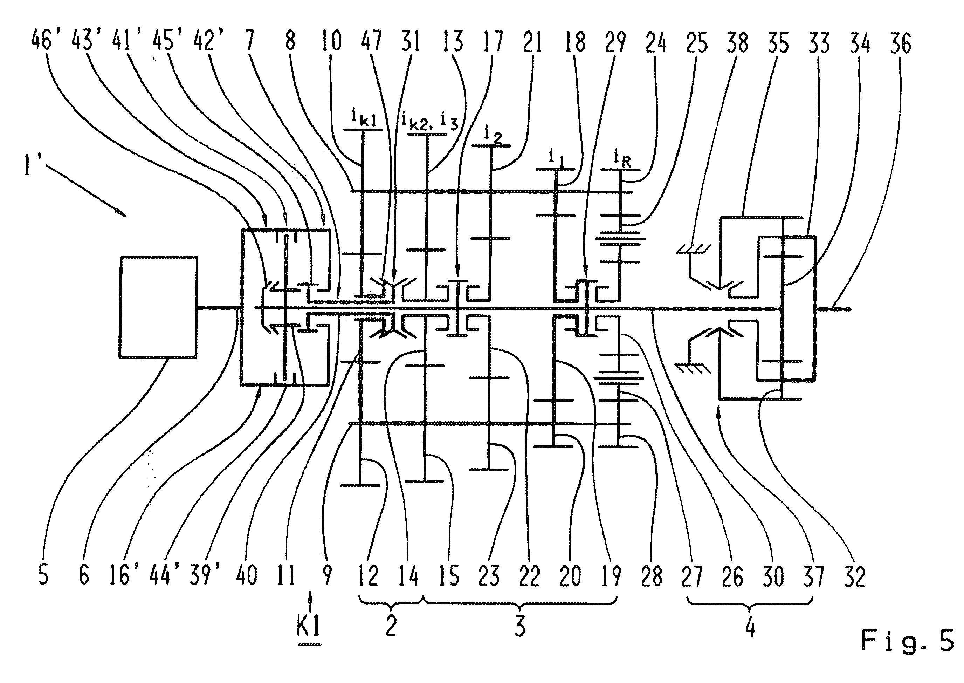

Das Verfahren wird anhand von in Fig. 2 und Fig. 3 bzw. in Fig. 5 bis Fig. 7 dargestellten Schaltstellungen der oben beschriebenen Getriebe 1 bzw. 1' näher erläutert. Zur Verdeutlichung ist die jeweilige Schaltstellung gesondert benannt und teilweise ein zugehöriger Drehmomenterifluss gestrichelt hervorgehoben dargestellt.

Zum Anfahren wird über die mit der Schalteinrichtung 31 der Vorschaltgruppe 2 verbundene Schaltkupplung, d.h. je nach Ausführung über das Schaltelement 45 der Synchronkupplung 42 oder das Schaltelement 45' der Klauenkupplung 42', die Reibungskupplung 41 bzw. 41' mit der Getriebeeingangswelle 40 verbunden. Fig. 2 zeigt die dazu gehörige Schaltstellung S1 der Synchronkupplung 42. In der Fig. 5 ist eine entsprechende Schaltstellung K1 der Klauenkupplung 42' durch den Momentenfluss des Anfahrgangs verdeutlicht. Der Anfahrgang ist hier der 1. Gang, d.h. das Antriebsdrehmoment verläuft von der Antriebswelle 6 kommend über die Reibungskupplung 41 bzw. 41' und die erste Gangkonstante iₖ₁ und weiter über die Vorgelegewellen 8, 9, und der Abtrieb verläuft über den 1. Hauptgetriebegang i₁ zur Getriebehauptwelle 30 über das sich im unteren Gangbereich befindende Bereichsgetriebe 4 zur Getriebeabtriebswelle 36.

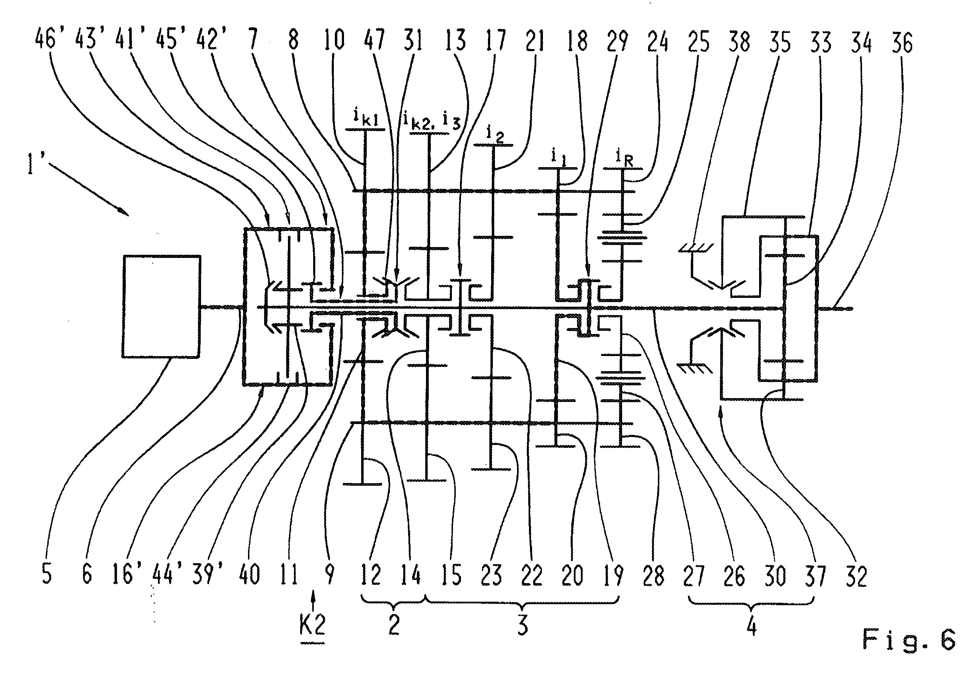

Nach dem Anfahren wird über das Schaltelement 45 der Synchronkupplung 42 bzw. das Schaltelement 45'der Klauenkupplung 42' das Kupplungseingangsteil 44 bzw. 44' mit der Getriebeeingangswelle 40 verbunden, so dass die Reibungskupplung 41 bzw. 41' überbrückt wird und ausgerückt werden kann. Der Momentenfluss im normalen Fahrbetrieb bei überbrückter Reibungskupplung 41' und die zugehörige Schaltstellung K2 der Klauenkupplung 42' ist in Fig. 6 dargestellt.

Fig. 3 zeigt die entsprechende Schaltstellung S2 der Synchronkupplung 42. Zusätzlich ist hier jedoch ein Direktgang geschaltet, wie er bei einem Gangwechsel als Zwischengang zur Zugkraftunterstützung des Gangwechsels angesteuert wird. Dazu wird das Schaltelement 46 bzw. 46' der Synchronkupplung 43 bzw. 43' des Zwischengangs mit der Reibungskupplung 41 bzw. 41' verbunden, so dass eine Direktverbindung als Zwischengang zwischen Antriebswelle 6 und Getriebehauptwelle 30 bzw. Getriebeabtriebswelle 36 hergestellt wird.

Durch den bei schlupfender Reibungskupplung zur Drehzahlanpassung an einen Zielgang eingelegten Zwischengang wird das Hauptgetriebe 3 lastfrei, so dass der Ursprungsgang ausgelegt werden kann. Wenn die Synchrondrehzahl des Folgeganges eingestellt ist, kann der Zielgang eingelegt werden. Die in Überbrückungssteilung S2 bzw. K2 befindliche Synchronkupplung 42 bzw. Klauenkupplung 42' bleibt dabei geschlossen. Dies ist die in Fig. 3 dargestellte Situation, in der die Reibungskupplung 41 in der Schaltstellung S2 überbrückt ist, wobei gleichzeitig der Zwischengang in der Schaltstellung S3 der Synchronkupplung 43 eingelegt ist. Nach erfolgtem Gangwechsel wird die Reibungskupplung 41, 41' wieder ausgerückt, also der Zwischengang gelöst.

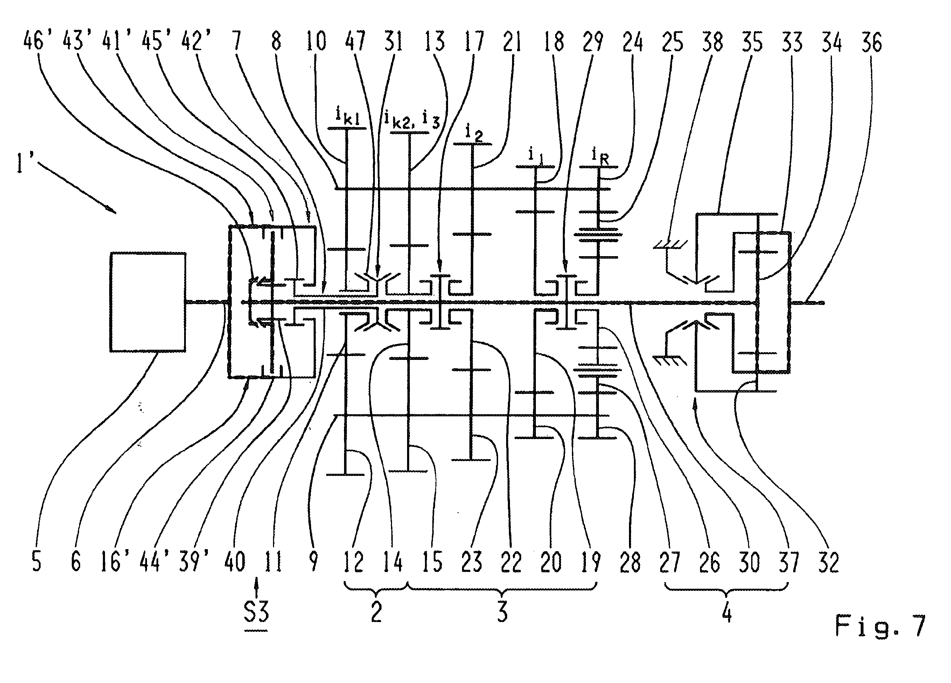

Fig. 7 verdeutlicht den Drehmomentenfluss des als Direktgang ausgelegten Zwischengangs in der Schaltstellung S3 der Synchronkupplung 43'. Das Motordrehmoment wird von der Antriebswelle 6 über die Reibungskupplung 41' im Schlupfbetrieb direkt auf die Getriebehauptwelle 30 übertragen, von der es über die, sich nun im oberen Gangbereich befindende Bereichsgruppe 4, d.h. bei verblockte Planeten, auf die Getriebeabtriebswelle 36 geleitet wird.

Alle zugkraftrelevanten Schaltungen, d.h. Zugschaltungen nach dem Anfahrvorgang, können bei zwischen Antriebswelle 6 und Getriebeeingangswelle 40 überbrückter Reibungskupplung 41, 41', also in den Schaltstellung S2 bzw. K2 der geschlossenen Synchronkupplung 42 bzw. Klauenkupplung 42', mit Zugkraftunterstützung im Zwischengang bei geschlossener Zwischengang-Synchronkupplung 43 bzw. 43' erfolgen.

Herkömmliche Schaltvorgänge mit Zugkraftunterbrechung können über die Anfahrkupplung 41, 41' bei in Schaltstellung S1 bzw. K1 geschlossener Synchronkupplung 42 bzw. Klauenkupplung 42' und offener Zwischengang-Synchronkupplung 43 bzw. 43' durchgeführt werden.

### Bezugszeichenliste

- 1,1': Zwei-Vorgelegewellen-Getriebe
- 2: Vorschaltgruppe, Splittergetriebe
- 3: Hauptgruppe, Hauptgetriebe
- 4: Nachschaltgruppe, Bereichsgetriebe
- 5: Antriebsmotor
- 6: Antriebswelle
- 7: Getriebeeingang
- 8: Vorgelegewelle
- 9: Vorgelegewelle
- 10: Festrad
- 11: Losrad
- 12: Festrad
- 13: Festrad
- 14: Losrad
- 15: Festrad
- 16, 16': Kupplungseinrichtung
- 17: Schalteinrichtung
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Getriebehauptwelle
- 31: Schalteinrichtung
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39, 39': Koppelteil
- 40: Getriebeeingangswelle
- 41, 41': Reibungskupplung, Anfahrkupplung, Zwischengangkupplung
- 42, 42': Schaltkupplung
- 43, 43': Schaltkupplung
- 44, 44': Kupplungseingangsteil
- 45, 45': Schaltelement
- 46,46: Schaltelement
- 47: Schaltelement

- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang
- K1: Schaltstellung
- K2: Schaltstellung
- S1: Schaltstellung
- S2: Schaltstellung
- S3: Schaltstellung

## Patentansprüche

1. Mehrgruppengetriebe eines Kraftfahrzeuges, mit wenigstens zwei in einem Antriebsstrang angeordneten Getriebegruppen (2, 3), bei dem Mittel zur Zugkraftunterstützung bei Gangwechseln vorhanden sind, **dadurch gekennzeichnet, dass** zwischen einem Antriebsmotor (5) mit einer Antriebswelle (6) und einem Getriebeeingang (7) mit einer Getriebeeingangswelle (40), eine eine Reibungskupplung (41, 41') sowie zwei Schaltkupplungen (42, 42', 43, 43') umfassende Kupplungseinrichtung (16, 16') angeordnet ist, wobei über die eine Schaltkupplung (42, 42') in einer ersten Schaltstellung (S1, K1) in Wirkverbindung mit der Reibungskupplung (41, 41') oder in einer zweiten Schaltstellung (S2, K2) bei Überbrückung der Reibungskupplung (41, 41') die Antriebswelle (6) mit der Getriebeeingangswelle (40) verbindbar ist, und wobei über die andere Schaltkupplung (43, 43') in einer Schaltstellung (S3) in Wirkverbindung mit der Reibungskupplung (41, 41') die Antriebswelle (6) direkt mit einer abtriebsseitigen Getriebehauptwelle (30) verbindbar ist.

2. Mehrgruppengetriebe nach Anspruch 1, **dadurch gekennzeichnet, dass** die der Getriebeeingangswelle (40) zugeordnete Schaltkupplung (42') als eine Klauenkupplung und die der Getriebehauptwelle (30) zugeordnete Schaltkupplung (43, 43') als eine Synchronkupplung ausgebildet ist.

3. Mehrgruppengetriebe nach Anspruch 1, **dadurch gekennzeichnet, dass** beide Schaltkupplungen (42, 43, 43') als Synchronkupplungen ausgebildet sind.

4. Mehrgruppengetriebe nach einem der Ansprüche 1 bis 3, **dadurch gekennzeichnet, dass** die Kupplungseinrichtung (16, 16') ein äußeres, die Reibungskupplung (41, 41') und die Schaltkupplungen (42, 42', 43, 43') aufnehmendes, motorseitig mit der Antriebswelle (6) verbundenes Kupplungseingangsteil (44, 44') aufweist, wobei das Kupplungseingangsteil (44, 44') als antreibendes Teil für die Reibungskupplung (41, 41') und wahlweise für die der Getriebeeingangswelle (40) zugeordnete Schaltkupplung (42, 42') wirksam ist, und dass die Reibungskupplung (41, 41') als antreibendes Teil für die der Getriebehauptwelle (30) zugeordnete Schaltkupplung (43, 43') und wahlweise für die der Getriebeeingangswelle (40) zugeordnete Schaltkupplung (42, 42') wirksam ist.

5. Mehrgruppengetriebe nach einem der Ansprüche 1 bis 4, **dadurch gekennzeichnet, dass** die der Getriebehauptwelle (30) zugeordnete Schaltkupplung (43') auf der dem Antriebsmotor (5) zugewandten Seite der Reibungskupplung (41') angeordnet ist, und dass die der Getriebeeingangswelle (40) zugeordnete Schaltkupplung (42') auf der von dem Antriebsmotor (5) abgewandten Seite der Reibungskupplung (41') angeordnet ist.

6. Mehrgruppengetriebe nach einem der Ansprüche 1 bis 4, **dadurch gekennzeichnet, dass** beide Schaltkupplungen (42, 43) auf der von dem Antriebsmotor (5) abgewandten Seite der Reibungskupplung (41) angeordnet sind.

7. Mehrgruppengetriebe nach einem der Ansprüche 1 bis 6, **dadurch gekennzeichnet, dass** die Getriebeeingangswelle (40) als eine die Getriebehauptwelle (30) koaxial umgebende Hohlwelle ausgebildet ist.

8. Mehrgruppengetriebe nach einem der Ansprüche 1 bis 7, **dadurch gekennzeichnet, dass** die Getriebeeingangswelle (40) an ihrem motornahen Ende mit einem Schaltelement (45, 45') der zugeordneten Schaltkupplung (42, 42') und an ihrem motorfernen Ende mit einem Schaltelement (47) einer Schalteinrichtung (31) zum wechselseitigen Schalten von Gangkonstanten (iₖ₁, iₖ₂) einer Vorschaltgruppe (2) verbunden ist.

9. Mehrgruppengetriebe nach Anspruch 8, **dadurch gekennzeichnet, dass** die Schalteinrichtung (31) der Vorschaltgruppe (2) als eine Synchronkupplung ausgebildet ist, über die wahlweise wechselseitig jeweils ein drehbar gelagertes Losrad (11, 14) der Gangkonstanten (iₖ₁, iₖ₂) drehfest mit der Getriebeeingangswelle (40) verbindbar ist.

10. Mehrgruppengetriebe nach einem der Ansprüche 1 bis 9, **dadurch gekennzeichnet, dass** drei automatisierte Getriebegruppen (2, 3, 4) vorgesehen sind, wobei erstens eine getriebeeingangsseitige Vorschaltgruppe (2) mit einer motornahen und einer motorfernen Gangkonstante (iₖ₁, iₖ₂), zweitens eine zentrale Hauptgruppe (3) mit wenigstens drei Gangstufen (i₁, i₂, i₃) und drittens eine getriebeausgangsseitige Nachschaltgruppe (4) mit zwei Gangbereichen im Kraftfluss hintereinander angeordnet sind, wobei die Vorschaltgruppe (2) und die Hauptgruppe (3) als Zahnradgetriebe in Vorgelegebauweise mit wenigstens einer gemeinsamen Vorgelegewelle (8, 9) ausgebildet sind, und die Nachschaltgruppe (4) als ein Planetengetriebe ausgebildet ist.

11. Mehrgruppengetriebe nach einem der Ansprüche 1 bis 10, **dadurch gekennzeichnet, dass** die Getriebehauptwelle (30) über die Nachschaltgruppe (4) mit einer Getriebeabtriebswelle (36) wirkverbunden ist.

12. Mehrgruppengetriebe nach einem der Ansprüche 1 bis 10, **dadurch gekennzeichnet, dass** die Getriebehauptwelle (30) direkt mit einer Getriebeabtriebswelle verbunden ist.

13. Mehrgruppengetriebe nach einem der Ansprüche 1 bis 12, **dadurch gekennzeichnet, dass** die Nachschaltgruppe (4) Lastschaltmittel zur zugkraftunterbrechungsfreien Gangbereichsumschaltung aufweist.

14. Verfahren zum Betrieb eines Mehrgruppengetriebes eines Kraftfahrzeuges, mit wenigstens zwei in einem Antriebsstrang angeordneten Getriebegruppen (2, 3), bei dem bei einem Gangwechsel zugkraftunterstützende Mittel aktiviert werden, **dadurch gekennzeichnet, dass** eine zwischen einem Antriebsmotor (5) mit einer Antriebswelle (6) und einem Getriebeeingang (7) mit einer Getriebeeingangswelle (40) angeordnete Kupplungseinrichtung (16, 16'), die eine von dem Antriebsmotor (5) antreibbare Reibungskupplung (41, 41') sowie zwei Schaltkupplungen (42, 42', 43, 43') umfasst, wobei die erste Schaltkupplung (42, 42') ausgangsseitig mit der Getriebeeingangswelle (40) verbunden und eingangsseitig wechselweise zwischen einer Kopplung mit der Reibungskupplung (41, 41') und einer Überbrückung der Reibungskupplung (41, 41') umschaltbar ist, und die zweite Schaltkupplung (43, 43') ausgangsseitig mit einer abtriebsseitigen Getriebehauptwelle (30) verbunden und eingangsseitig mit der Reibungskupplung (41, 41') koppelbar ist, derart angesteuert wird, dass die Reibungskupplung (41, 41') im Zusammenwirken mit der ersten Schaltkupplung (42, 42') als eine Anfahrkupplung und im Zusammenwirken mit der zweiten Schaltkupplung (43, 43'), wobei die erste Schaltkupplung (42, 42') gleichzeitig die Reibungskupplung (41, 41') im Kraftschluss mit dem Antriebsmotor (5) überbrückt, als eine Zwischengangkupplung zum Schalten eines Zwischengangs bei einem Gangwechsel fungiert, bei dem eine direkte Kraftflussverbindung zwischen dem Antriebsmotor (5) und der mit einer Getriebeabtriebswelle (36) zumindest wirkverbundenen Getriebehauptwelle (30) hergestellt wird.

15. Verfahren nach Anspruch 14, **dadurch gekennzeichnet, dass** bei einer Zwischengangschaltung bei einem Gangwechsel die als Zwischengangkupplung fungierende Reibungskupplung (41, 41') im schlupfenden Zustand das Drehmoment des Antriebsmotors (5) an der abtriebsseitigen Getriebehauptwelle (30) abstützt, während die Drehzahl des Antriebsmotors (5) an eine Synchrondrehzahl eines Zielganges angepasst wird, ein Ursprungsgang lastfrei ausgelegt und der Zielgang bei erreichter Synchrondrehzahl eingelegt wird, sowie abschließend der Zwischengang wieder geöffnet wird.

16. Verfahren nach Anspruch 14 oder 15, **dadurch gekennzeichnet, dass** bei einem Anfahrvorgang zunächst die Reibungskupplung (41, 41') mit der der Getriebeeingangswelle (40) zugeordneten ersten Schaltkupplung (42, 42') verbunden und dann eingerückt wird, und dass nach dem Anfahren die Reibungskupplung (41, 41') überbrückt und unmittelbar anschlie-βend ausgerückt wird.

## Claims

1. Multi-group transmission of a motor vehicle, with at least two transmission groups (2, 3) arranged in a drivetrain, in the case of which means for tractive force support are present in the case of gear changing, **characterized in that** a clutch device (16, 16'), which comprises a friction clutch (41, 41') and two shift clutches (42, 42', 43, 43'), is arranged between a drive motor (5) with a drive shaft (6) and a transmission input (7) with a transmission input shaft (40), wherein the drive shaft (6) can be connected to the transmission input shaft (40) via one shift clutch (42, 42') in a first shift position (S1, K1) in operative connection with the friction clutch (41, 41') or in a second shift position (S2, K2) in the case of bridging of the friction clutch (41, 41'), and wherein the drive shaft (6) can be connected directly to an output-side transmission main shaft (30) via the other shift clutch (43, 43') in a shift position (S3) in operative connection with the friction clutch (41, 41').

2. Multi-group transmission according to Claim 1, **characterized in that** the shift clutch (42') assigned to the transmission input shaft (40) is formed as a jaw clutch and the shift clutch (43, 43') assigned to the transmission main shaft (30) is formed as a synchronous clutch.

3. Multi-group transmission according to Claim 1, **characterized in that** both shift clutches (42, 43, 43') are formed as synchronous clutches.

4. Multi-group transmission according to one of Claims 1 to 3, **characterized in that** the clutch device (16, 16') has an outer clutch input part (44, 44'), which receives the friction clutch (41, 41') and the shift clutches (42, 42', 43, 43') and is connected to the drive shaft (6) on the motor side, wherein the clutch input part (44, 44') is active as a driving part for the friction clutch (41, 41') and optionally for the shift clutch (42, 42') assigned to the transmission input shaft (40), and that the friction clutch (41, 41') is active as a driving part for the shift clutch (43, 43') assigned to the transmission main shaft (30) and optionally for the shift clutch (42, 42') assigned to the transmission input shaft (40).

5. Multi-group transmission according to one of Claims 1 to 4, **characterized in that** the shift clutch (43') assigned to the transmission main shaft (30) is arranged on the side of the friction clutch (41') which faces the drive motor (5), and that the shift clutch (42') assigned to the transmission input shaft (40) is arranged on the side of the friction clutch (41') which faces away from the drive motor (5).

6. Multi-group transmission according to one of Claims 1 to 4, **characterized in that** both shift clutches (42, 43) are arranged on the side of the friction clutch (41) which faces away from the drive motor (5).

7. Multi-group transmission according to one of Claims 1 to 6, **characterized in that** the transmission input shaft (40) is formed as a hollow shaft which coaxially surrounds the transmission main shaft (30).

8. Multi-group transmission according to one of Claims 1 to 7, **characterized in that** the transmission input shaft (40) is connected, at its end close to the motor, to a shift element (45, 45') of the assigned shift clutch (42, 42') and, at its end remote from the motor, to a shift element (47) of a shift device (31) for alternate shifting of gear constants (iₖ₁, iₖ₂) of an upstream group (2).

9. Multi-group transmission according to Claim 8, **characterized in that** the shift device (31) of the upstream group (2) is formed as a synchronous clutch via which, optionally alternately, in each case a rotatably mounted loose wheel (11, 14) of the gear constants (iₖ₁, iₖ₂) can be connected in a rotationally conjoint manner to the transmission input shaft (40).

10. Multi-group transmission according to one of Claims 1 to 9, **characterized in that** three automated transmission groups (2, 3, 4) are provided, wherein firstly a transmission input-side upstream group (2) with a gear constant (iₖ₁, iₖ₂) close to the motor and remote from the motor, secondly a central main group (3) with at least three gear stages (i₁, i₂, i₃) and thirdly a transmission output-side downstream group (4) with two gear ranges are arranged consecutively in the flow of force, wherein the upstream group (2) and the main group (3) are formed as a gear wheel transmission of countershaft design with at least one shared countershaft (8, 9) and the downstream group (4) is formed as a planetary transmission.

11. Multi-group transmission according to one of Claims 1 to 10, **characterized in that** the transmission main shaft (30) is operatively connected to the transmission output shaft (36) via the downstream group (4).

12. Multi-group transmission according to one of Claims 1 to 10, **characterized in that** the transmission main shaft (30) is connected directly to a transmission output shaft.

13. Multi-group transmission according to one of Claims 1 to 12, **characterized in that** the downstream group (4) has power-shift means for tractive force interruption-free gear range switching.

14. Method for operating a multi-group transmission of a motor vehicle, with at least two transmission groups (2, 3) arranged in a drivetrain, in the case of which means for tractive force support are activated in the case of a gear change, **characterized in that** a clutch device (16, 16'), which comprises a friction clutch (41, 41') which can be driven by the drive motor (5) and two shift clutches (42, 42', 43, 43') and which is arranged between a drive motor (5) with a drive shaft (6) and a transmission input (7) with a transmission input shaft (40), wherein the first shift clutch (42, 42') is connected on the output side to the transmission input shaft (40) and on the output side can be switched alternately between a coupling with the friction clutch (41, 41') and a bridging of the friction clutch (41, 41'), and the second shift clutch (43, 43') is connected on the output side to an output-side transmission main shaft (30) and can be coupled on the input side to the friction clutch (41, 41'), is actuated in such a manner that the friction clutch (41, 41') acts, in interaction with the first shift clutch (42, 42'), as a starting clutch and, in interaction with the second shift clutch (43, 43'), wherein the first shift clutch (42, 42') simultaneously bridges the friction clutch (41, 41') in the flow of force to the drive motor (5), as an intermediate gear clutch for shifting of an intermediate gear in the case of a gear change, in the case of which a direct flow of force connection is produced between the drive motor (5) and the transmission main shaft (30) which is at least operatively connected to a transmission output shaft (36).

15. Method according to Claim 14, **characterized in that**, in the case of an intermediate gear shift in the case of a gear change, the friction clutch (41, 41') which acts as an intermediate gear clutch, in the slipping state, supports the torque of the drive motor (5) on the output-side transmission main shaft (30), while the rotational speed of the drive motor (5) is adjusted to a synchronous rotational speed of a target gear, an original gear is disengaged free of load and the target gear is engaged when the synchronous rotational speed is reached, and subsequently the intermediate gear is opened again.

16. Method according to Claim 14 or 15, **characterized in that**, in the case of a starting operation, initially the friction clutch (41, 41') is connected to the first shift clutch (42, 42') assigned to the transmission input shaft (40) and then engaged and that, after starting, the friction clutch (41, 41') is bridged and subsequently immediately disengaged.

## Revendications

1. Boîte de vitesses à plusieurs groupes pour un véhicule automobile, comprenant au moins deux groupes de boîte de vitesses (2, 3) disposés dans une chaîne cinématique, des moyens d'assistance à la force de traction étant prévus pour les changements de vitesse, **caractérisée en ce qu'**entre un moteur d'entraînement (5) comprenant un arbre d'entraînement (6) et une entrée de boîte de vitesses (7) avec un arbre d'entrée de boîte de vitesses (40) est disposé un dispositif d'embrayage (16, 16') comprenant un embrayage à friction (41, 41') ainsi que deux embrayages de changement de vitesse (42, 42', 43, 43'), l'arbre d'entraînement (6) pouvant être connecté à l'arbre d'entrée de boîte de vitesses (40) par le biais de l'un des embrayages de changement de vitesse (42, 42') dans une première position de changement de vitesse (S1, K1) en liaison fonctionnelle avec l'embrayage à friction (41, 41') ou dans une deuxième position de changement de vitesse (S2, K2) lors du pontage de l'embrayage à friction (41, 41'), et l'arbre d'entraînement (6) pouvant être connecté directement à un arbre principal de boîte de vitesses (30) du côté de la prise de force par le biais de l'autre embrayage de changement de vitesse (43, 43') dans une position de changement de vitesse (S3) en liaison fonctionnelle avec l'embrayage à friction (41, 41').

2. Boîte de vitesses à plusieurs groupes selon la revendication 1, **caractérisée en ce que** l'embrayage de changement de vitesse (42') associé à l'arbre d'entrée de boîte de vitesses (40) est réalisé sous forme d'embrayage à griffes et l'embrayage de changement de vitesse (43, 43') associé à l'arbre principal de boîte de vitesses (30) est réalisé sous forme d'embrayage synchrone.

3. Boîte de vitesses à plusieurs groupes selon la revendication 1, **caractérisée en ce que** les deux embrayages de changement de vitesse (42, 43, 43') sont réalisés sous forme d'embrayages synchrones.

4. Boîte de vitesses à plusieurs groupes selon l'une quelconque des revendications 1 à 3, **caractérisée en ce que** le dispositif d'embrayage (16, 16') présente une partie d'entrée d'embrayage (44, 44') extérieure, recevant l'embrayage à friction (41, 41') et les embrayages de changement de vitesse (42, 42', 43, 43'), connectée du côté du moteur à l'arbre d'entraînement (6), la partie d'entrée d'embrayage (44, 44') étant active en tant que partie d'entraînement pour l'embrayage à friction (41, 41') et de manière sélective pour l'embrayage de changement de vitesse (42, 42') associé à l'arbre d'entrée de boîte de vitesses (40), et **en ce que** l'embrayage à friction (41, 41') est actif en tant que partie d'entraînement pour l'embrayage de changement de vitesse (43, 43') associé à l'arbre principal de boîte de vitesses (30) et de manière sélective pour l'embrayage de changement de vitesse (42, 42') associé à l'arbre d'entrée de boîte de vitesses (40).

5. Boîte de vitesses à plusieurs groupes selon l'une quelconque des revendications 1 à 4, **caractérisée en ce que** l'embrayage de changement de vitesse (43') associé à l'arbre principal de boîte de vitesses (30) est disposé du côté de l'embrayage à friction (41') tourné vers le moteur d'entraînement (5), et **en ce que** l'embrayage de changement de vitesse (42') associé à l'arbre d'entrée de boîte de vitesses (40) est disposé du côté de l'embrayage à friction (41') opposé au moteur d'entraînement (5).

6. Boîte de vitesses à plusieurs groupes selon l'une quelconque des revendications 1 à 4, **caractérisée en ce que** les deux embrayages de changement de vitesse (42, 43) sont disposé du côté de l'embrayage à friction (41) opposé au moteur d'entraînement (5).

7. Boîte de vitesses à plusieurs groupes selon l'une quelconque des revendications 1 à 6, **caractérisée en ce que** l'arbre d'entrée de boîte de vitesses (40) est réalisé sous forme d'arbre creux entourant coaxialement l'arbre principal de boîte de vitesses (30).

8. Boîte de vitesses à plusieurs groupes selon l'une quelconque des revendications 1 à 7, **caractérisée en ce que** l'arbre d'entrée de boîte de vitesses (40) est connecté au niveau de son extrémité proche du moteur à un élément de changement de vitesse (45, 45') de l'embrayage de changement de vitesse associé (42, 42') et à son extrémité éloignée du moteur à un élément de changement de vitesse (47) d'un dispositif de changement de vitesse (31) en vue de commuter en alternance entre des constantes de rapport (iₖ₁, iₖ₂) d'un groupe monté en amont de la boîte de vitesses (2).

9. Boîte de vitesses à plusieurs groupes selon la revendication 8, **caractérisée en ce que** le dispositif de changement de vitesse (31) du groupe monté en amont de la boîte de vitesses (2) est réalisé sous forme d'embrayage synchrone, par le biais duquel un pignon fou (11, 14) monté à rotation, des constantes de rapport (iₖ₁, iₖ₂) peut à chaque fois être connecté en alternance de manière sélective et de manière solidaire en rotation à l'arbre d'entrée de boîte de vitesses (40).

10. Boîte de vitesses à plusieurs groupes selon l'une quelconque des revendications 1 à 9, **caractérisée en ce que** trois groupes de boîte de vitesses automatisés (2, 3, 4) sont prévus, premièrement un groupe monté en amont de la boîte de vitesses (2) du côté de l'entrée de la boîte de vitesses, avec une constante de rapport (iₖ₁, iₖ₂) proche du moteur et une constante de rapport éloignée du moteur, deuxièmement un groupe principal central (3) avec au moins trois étages de rapport (i₁, i₂, i₃) et troisièmement un groupe monté en aval de la boîte de vitesses (4) du côté de la sortie de la boîte de vitesses avec deux plages de rapport, étant disposés les uns derrière les autres dans le flux de force, le groupe monté en amont de la boîte de vitesses (2) et le groupe principal (3) étant réalisés sous forme de transmission à engrenage à construction intermédiaire, avec au moins un arbre intermédiaire commun (8, 9), et le groupe monté en aval de la boîte de vitesses (4) étant réalisé sous forme de transmission planétaire.

11. Boîte de vitesses à plusieurs groupes selon l'une quelconque des revendications 1 à 10, **caractérisée en ce que** l'arbre principal de boîte de vitesses (30) est en liaison fonctionnelle par le biais du groupe monté en aval de la boîte de vitesses (4) avec un arbre de prise de force de la boîte de vitesses (36).

12. Boîte de vitesses à plusieurs groupes selon l'une quelconque des revendications 1 à 10, **caractérisée en ce que** l'arbre principal de boîte de vitesses (30) est connecté directement à un arbre de prise de force de la boîte de vitesses.

13. Boîte de vitesses à plusieurs groupes selon l'une quelconque des revendications 1 à 12, **caractérisée en ce que** le groupe monté en aval de la boîte de vitesses (4) présente des moyens de commutation de la charge pour commuter les plages de rapport sans interruption de la force de traction.

14. Procédé pour faire fonctionner une boîte de vitesses à plusieurs groupes pour un véhicule automobile, comprenant au moins deux groupes de boîte de vitesses (2, 3) disposés dans une chaîne cinématique, des moyens d'assistance à la force de traction étant activés lors d'un changement de vitesse, **caractérisé en ce qu'**un dispositif d'embrayage (16, 16') disposé entre un moteur d'entraînement (5) comprenant un arbre d'entraînement (6) et une entrée de boîte de vitesses (7) avec un arbre d'entrée de boîte de vitesses (40), lequel dispositif d'embrayage comprend un embrayage à friction (41, 41') pouvant être entraîné par le moteur d'entraînement (5) ainsi que deux embrayages de changement de vitesse (42, 42', 43, 43'), où le premier embrayage de changement de vitesse (42, 42') est connecté du côté de la sortie à l'arbre d'entrée de boîte de vitesses (40) et peut être commuté du côté de l'entrée de manière sélective entre un accouplement avec l'embrayage à friction (41, 41') et un pontage de l'embrayage à friction (41, 41'), et où le deuxième embrayage de changement de vitesse (43, 43') est connecté du côté de la sortie à un arbre principal de boîte de vitesses (30) du côté de la prise de force et peut être accouplé du côté de l'entrée à l'embrayage à friction (41, 41'), est commandé de telle sorte que l'embrayage à friction (41, 41'), en coopération avec le premier embrayage de changement de vitesse (42, 42'), serve d'embrayage de démarrage, et en coopération avec le deuxième embrayage de changement de vitesse (43, 43'), où le premier embrayage de changement de vitesse (42, 42') ponte simultanément l'embrayage à friction (41, 41') dans le flux de force avec le moteur d'entraînement (5), serve d'embrayage de rapport intermédiaire pour passer un rapport intermédiaire lors d'un changement de vitesse, une connexion de flux de force directe étant établie entre le moteur d'entraînement (5) et l'arbre principal de boîte de vitesses (30) au moins en liaison fonctionnelle avec un arbre de prise de force de boîte de vitesses (36).

15. Procédé selon la revendication 14, **caractérisé en ce que** dans le cas d'un passage à un rapport intermédiaire dans le cas d'un changement de vitesse l'embrayage à friction (41, 41') servant d'embrayage de rapport intermédiaire dans l'état de glissement supporte le couple du moteur d'entraînement (5) au niveau de l'arbre principal de boîte de vitesses (30) du côté de la prise de force, tandis que la vitesse de rotation du moteur d'entraînement (5) est adaptée à une vitesse de rotation synchrone d'un rapport cible, un rapport initial est sorti d'engagement sans charge, et le rapport cible est enclenché lorsque la vitesse de rotation synchrone est atteinte, et ensuite le rapport intermédiaire est à nouveau ouvert.

16. Procédé selon la revendication 14 ou 15, **caractérisé en ce que** dans le cas d'une opération de démarrage, tout d'abord l'embrayage à friction (41, 41') est connecté au premier embrayage de changement de vitesse (42, 42') associé à l'arbre d'entrée de boîte de vitesses (40) et est ensuite embrayé, et **en ce qu'**après le démarrage, l'embrayage à friction (41, 41') est ponté et est ensuite immédiatement débrayé.
